# EUROPEAN PATENT APPLICATION

(11) **EP 2 338 839 A1**
(43) Date of publication of application: **29.06.2011**
(21) Application number: 10195251.3
(22) Date of filing: 15.12.2010
(51) Int. Cl.: C02F 1/32, C02F 1/76, C02F 1/28

(54) **Ultraviolet irradiation device**

(30) Priority: 22.12.2009 JP 2009291296
(71) Applicant: Kabushiki Kaisha Toshiba, Minato-ku, Tokyo 105-8001 (JP)
(72) Inventor: Kobayashi, Shinji, Tokyo 105-8001 (JP); Abe, Norimitsu, Tokyo 105-8001 (JP); Soma, Takahiro, Tokyo 105-8001 (JP); Shirota, Akihiko, Tokyo 105-8001 (JP)
(74) Representative: Henkel, Feiler & Hänzel

(57) **Abstract**

According to one embodiment, an ultraviolet irradiation device (1) that sterilizes, disinfects, and inactivates raw water such as city water or underground water, includes a water processing vessel (6), an ultraviolet sensor (3), and a controller (4). The water processing vessel (6) includes a water supply port (1a) into which the raw water flows, at least a pair of ultraviolet lamps (8a, 8b, 8c, 8d, 8e, 8f) configured to irradiate the raw water that flows into the water processing vessel (6) with ultraviolet rays, and a water discharge port (1b) from which the raw water irradiated with the ultraviolet rays is discharged. The ultraviolet sensor (3) is configured to measure an amount of ultraviolet rays irradiated from the ultraviolet lamps (8a, 8b, 8c, 8d, 8e, 8f). The controller (4) is configured to control turnon and turnoff of the ultraviolet lamps (8a, 8b, 8c, 8d, 8e, 8f).

## Description

### FIELD

Embodiments described herein relate generally to an ultraviolet irradiation device that sterilizes, disinfects, or inactivates raw water such as city water or underground water making use of ultraviolet rays.

### BACKGROUND

Chemicals such as ozone and chlorine are used to perform sterilization and disinfection of raw water such as city water and underground water, sterilization, disinfection, and decoloration of industrial water, or bleaching of pulp, and further sterilization of medical equipment and the like.

In a conventional disinfection device, since a retention vessel and a stirring device such as a spray pump are necessary to uniformly dissolve ozone and a chemical in water to be processed, a change of water quality and water amount cannot be instantly coped with. In contrast, since ultraviolet rays have sterilizing, disinfecting and decoloring actions, deodorizing and decoloring actions of industrial water, or a bleaching action of pulp, and the like, the ultraviolet rays have a merit of instantly coping with a change of water quality and water amount. Thus, recently, an attention has been paid to an ultraviolet irradiation device that sterilizes and purifies raw water by irradiating the raw water with ultraviolet rays as one of sterilization-disinfection means. Jpn. Pat. Appln. KOKAI Publication No. 2004-223502 discloses an ultraviolet sterilization-purification device having a function of detecting a crack and damage of a protection pipe for protecting an ultraviolet lamp, and the like.

However, the ultraviolet sterilization-purification device has the following problems.
(1) When ultraviolet rays are used, supplied water and sewage water are sterilized, disinfected, and inactivated within a few seconds during which they are irradiated with ultraviolet rays from an ultraviolet source. However, when an ultraviolet lamp with a high brightness and a high output is used as an ultraviolet source, since the lamp has a short life, a predetermined ultraviolet output, which is necessary for disinfection, sterilization, and inactivation, cannot be ensured until a periodic maintenance cycle per year is reached.
(2) When the ultraviolet lamp is used as the ultraviolet source, the predetermined ultraviolet output, which is necessary for disinfection, sterilization and inactivation, cannot be ensured until a lamp life is reached depending on operation history such as the number of turnon and turnoff times, an environment in which the ultraviolet lamp is installed, and an increase and decrease of a lamp input.

### BRIEF DESCRIPTION OF THE DRAWINGS

FIG. 1 is a view for explaining processing procedures in a supplied water processing system;
FIG. 2A is a plan view of an ultraviolet irradiation device according to an embodiment, and FIG. 2B is a side elevational view of the ultraviolet irradiation device;
FIG. 3 is a view for explaining switching of ultraviolet lamps of the ultraviolet irradiation device of FIG. 2B;
FIG. 4 is a view showing a modification of layout of the ultraviolet lamp of FIG. 3; and
FIG. 5 is a view showing another modification of layout of the ultraviolet lamp of FIG. 3.

### DETAILED DESCRIPTION

In general, according to one embodiment, an ultraviolet irradiation device that sterilizes, disinfects, and inactivates raw water such as city water or underground water, includes a water processing vessel, an ultraviolet sensor, and a controller. The water processing vessel includes a water supply port into which the raw water flows, at least a pair of ultraviolet lamps configured to irradiate the raw water that flows into the water processing vessel with ultraviolet rays, and a water discharge port from which the raw water irradiated with the ultraviolet rays is discharged. The ultraviolet sensor is configured to measure an amount of ultraviolet rays irradiated from the ultraviolet lamps. The controller is configured to control turnon and turnoff of the ultraviolet lamps.
(1) A device of the embodiment includes at least a pair of (preferably, two pairs or more of) ultraviolet lamps in a water processing vessel, an ultraviolet sensor configured to measure an amount of ultraviolet irradiation irradiated from the ultraviolet lamps, and a controller configured to control turnon and turnoff of the ultraviolet lamps. When, for example, a pair of ultraviolet lamps is disposed and a life of one of the ultraviolet lamps reaches a predetermined period, the lamp can be automatically switched to the other ultraviolet lamp. Note that the ultraviolet lamps can also be switched manually. Switching of the ultraviolet lamps as described above allows a predetermined ultraviolet output, which is necessary for disinfection, sterilization, and inactivation, to be ensured until the periodic maintenance cycle is reached.
(2) In the embodiment, when the ultraviolet sensor determines that ultraviolet outputs from the ultraviolet lamps are lowered below a predetermined value, the controller preferably switches the ultraviolet lamps to be turned on sequentially. With the operation, the same effect as that described above can be obtained.
(3) In the embodiment, when the ultraviolet outputs from the ultraviolet lamps are lowered below the predetermined value, the controller preferably turns on all the ultraviolet lamps or increases the number of the ultraviolet lamps to be turned on. With the operation, the same effect as that described above can be obtained.
(4) In the embodiment, the ultraviolet lamps are preferably medium pressure mercury lamps. A lamp used for an ultraviolet processing in a purification plant is roughly classified into a low pressure mercury lamp and a medium pressure mercury lamp. Although a life of the medium pressure mercury lamp is shorter than that of the low pressure mercury lamp, the medium pressure mercury lamp has a merit that it has a high output, and since the number of medium pressure mercury lamps to be used is small, a facility can be reduced in size, and the like. Accordingly, even when a direction in which the ultraviolet lamps are disposed intersects a direction in which raw water flows, bacilli in raw water can be sterilized, disinfected, and inactivated.

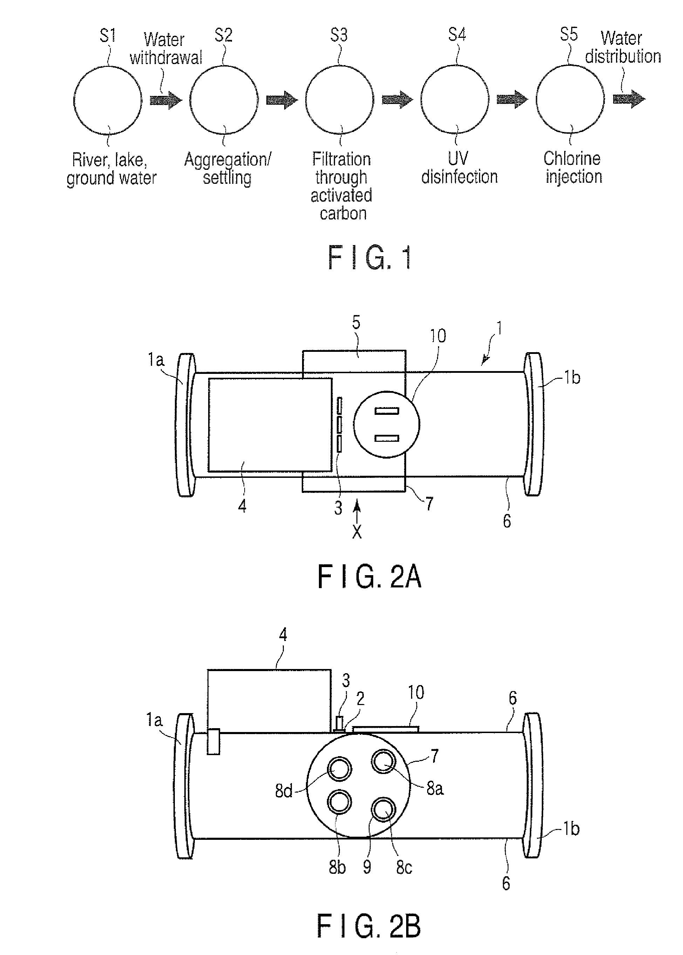

Next, an outline of a process in a supplied water processing system will be described with reference to FIG. 1.

First, raw water is taken from a river, a lake, or underground water (step S1), the taken raw water is introduced to an aggregation-precipitation vessel to which an aggregation agent is added thereby effecting aggregation and precipitation (step S2). Next, supernatant water in the aggregation-precipitation vessel is sent to an activated carbon filter vessel, and foreign substances are filtered off (step S3), and the filtered water is sent to an ultraviolet irradiation device and irradiated with ultraviolet rays (step S4), and the UV sterilized water is sent to a chlorine injection vessel to which chlorine is injected (step S5), and then the water is supplied to ordinary households, business facilities and the like.

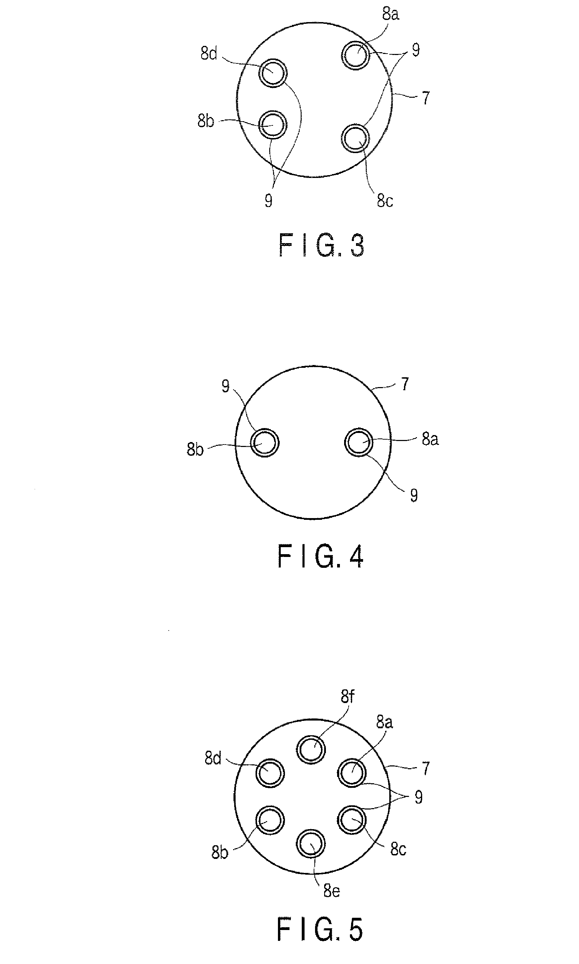

Next, an ultraviolet irradiation device according to an embodiment will be described with reference to FIGS. 2A, 2B and 3. FIG. 2A shows a plan view of the ultraviolet irradiation device, and FIG. 2B shows a side elevational view of the ultraviolet irradiation device when viewed from an X-direction in FIG. 2A. Further, FIG. 3 shows an example of switching of ultraviolet lamps. Note that the embodiment is by no means limited to the following description.

The ultraviolet irradiation device includes a reactor 1 as a water processing vessel, monitor windows 2, ultraviolet sensors 3, a counter (not shown), a power supply box 4 as a controller, and a cleaning mechanism 5. The reactor 1 includes a first pipe 6 having a water supply port 1a into which raw water flows from a river, a lake, or ground water and a water discharge port 1b from which processed raw water irradiated with ultraviolet rays is discharged, and a second pipe 7 that intersects the first pipe 6. Four ultraviolet lamps (medium pressure mercury lamps) 8a, 8b, 8c, 8d, which are protected by quartz protection pipes 9, are disposed in the second pipe 7. An inspection window 10 is disposed in a part of the first pipe 6 that intersects the second pipe 7.

Of the four ultraviolet lamps 8a to 8d, the ultraviolet lamp 8a and the ultraviolet lamp 8b are used in pair and the ultraviolet lamp 8c and the ultraviolet lamp 8d are used in pair in relation to a flow of water to be processed in the reactor. A plurality of ultraviolet sensors 3 are disposed to measure ultraviolet irradiation amounts from the ultraviolet lamps 8a to 8d through the monitor windows 2. The counter is disposed to measure irradiation time of the ultraviolet lamps 8a to 8d and electrically connected to the ultraviolet lamps 8a to 8d. The power supply box 4 includes a control circuit board of electronic parts, an electronic stabilizer (not shown) that is necessary to turn on the ultraviolet lamps 8a to 8d, a controller for the cleaning mechanism 5, and the like. Further, although not shown, a control device, which controls turnon and turnoff of the ultraviolet lamps 8a to 8d, is electrically connected to the ultraviolet lamps 8a to 8d. The control device includes a cumulation timer (or a built-in timer) and is configured such that, when an irradiation time of one pair of ultraviolet lamps 8a, 8b reaches a predetermined period, the control device automatically switches the ultraviolet lamps 8a, 8b to the ultraviolet lamps 8c, 8d when a set time is reached. The cleaning mechanism 5 includes brushes and the like that clean outer peripheral portions of the protection pipes 9 which protect the ultraviolet lamps 8a to 8d.

In the ultraviolet irradiation device configured as described above, first, raw water, which is subjected to a filter process by activated carbon, is supplied from the water supply port 1a of the first pipe 6 of the reactor 1, the raw water is sterilized, disinfected, and inactivated by ultraviolet rays from the ultraviolet lamps 8a, 8b, and the processed raw water, to which the ultraviolet rays are irradiated, is discharged from the water discharge port 1b of the first pipe 6. Further, when the ultraviolet lamps 8a, 8b reach life limits (for example, 4500 hours), the ultraviolet lamps 8a, 8b are automatically switched to the ultraviolet lamps 8c, 8d, and sterilization of raw water is continuously performed. However, even after the ultraviolet lamps 8a, 8b are switched to the ultraviolet lamps 8c, 8d, when a total ultraviolet output is lowered below a predetermined value, the ultraviolet output may be ensured by turning on the ultraviolet lamp 8a (or 8b) or both the lamps 8a, 8b additionally.

According to the ultraviolet disinfection device of the embodiment, when the two pairs of ultraviolet lamps 8a to 8d are disposed in the second pipe 7 of the reactor 1 and the ultraviolet lamps 8a, 8b used at the beginning of operation of the ultraviolet irradiation device reach a life limit, the ultraviolet lamps 8a, 8b can be automatically switched to the other ultraviolet lamps 8c, 8d, and thus, sterilization, disinfection, and inactivation capabilities can be kept until a period of a maintenance cycle is reached.

In the embodiment, although the case where the two pairs of ultraviolet lamps are used has been described, the embodiment is by no means limited thereto and, for example, a pair of ultraviolet lamps 8a, 8b may be used as shown in FIG. 4 and three pairs of the ultraviolet lamps 8a, 8b, 8c, 8d, 8e, 8f may be used as shown in FIG. 5. Further, the protection pipes, which protect the ultraviolet lamps, are not limited to the quartz pipes, and any dielectric tubes may be used as long as ultraviolet rays can be transmitted therethrough. Note that, in FIG. 5, although the ultraviolet lamps are disposed at equal intervals in a circumferential direction of the second pipe, the disposition of the ultraviolet lamps is not necessarily limited thereto.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An ultraviolet irradiation device (1) that sterilizes, disinfects, and inactivates raw water such as city water or underground water, **characterized by** comprising:
a water processing vessel (6) comprising a water supply port (1a) into which the raw water flows, at least a pair of ultraviolet lamps (8a, 8b, 8c, 8d, 8e, 8f) configured to irradiate the raw water that flows into the water processing vessel (6) with ultraviolet rays, and a water discharge port (1b) from which the raw water irradiated with the ultraviolet rays is discharged;
an ultraviolet sensor (3) configured to measure an amount of ultraviolet rays irradiated from the ultraviolet lamps (8a, 8b, 8c, 8d, 8e, 8f); and
a controller (4) configured to control turnon and turnoff of the ultraviolet lamps (8a, 8b, 8c, 8d, 8e, 8f) .

2. The device according to claim 1, **characterized in that**, when ultraviolet outputs from the ultraviolet lamps are lowered below a predetermined value, the controller sequentially switches the ultraviolet lamps to be turned on.

3. The device according to claim 1, **characterized in that**, when ultraviolet outputs from the ultraviolet lamps (8a, 8b, 8c, 8d, 8e, 8f) are lowered below the predetermined value, the controller (4) turns on all the ultraviolet lamps (8a, 8b, 8c, 8d, 8e, 8f) or increases the number of the ultraviolet lamps (8a, 8b, 8c, 8d, 8e, 8f) to be turned on.

4. The device according to claim 1, **characterized in that** the ultraviolet lamps (8a, 8b, 8c, 8d, 8e, 8f) are medium pressure mercury lamps.

5. The device according to claim 4, **characterized in that** a direction in which the ultraviolet lamps (8a, 8b, 8c, 8d, 8e, 8f) are disposed intersects a direction in which water to be processed flows.
